# EUROPÄISCHE PATENTSCHRIFT

(11) **EP 1 533 643 B1**
(45) Veröffentlichungstag und Bekanntmachung des Hinweises auf die Patenterteilung: **26.08.2015**
(21) Anmeldenummer: 04027398.9
(22) Anmeldetag: 18.11.2004
(51) Int. Cl.: G02B 21/24

(54) **Beobachtungsgerät mit separater Bedienungseinheit**
Observation device having a separate control unit
Dispositif d'observation à unité de commande séparée

(30) Priorität: 21.11.2003 DE 10355526
(43) Veröffentlichungstag der Anmeldung: 25.05.2005
(73) Patentinhaber: Carl Zeiss Microscopy GmbH, 07745 Jena (DE)
(72) Erfinder: Kaufhold, Tobias, 07749 Jena (DE); Knoblich, Johannes, 07747 Jena (DE); Serfling, Thomas, 07743 Jena (DE)

(56) Entgegenhaltungen:
- DE-U- 20 013 359
- US-A- 5 602 674
- US-A- 5 691 841
- US-A1- 2001 045 506

## Beschreibung

Die Erfindung bezieht sich auf ein Beobachtungsgerät, bei dem ein Benutzer Objekte oder Verfahrensabläufe beobachtet und die Darstellung des Objekts oder den Ablauf des Verfahrens durch die Eingabe von Bedienungs- und Steuerbefehlen beeinflußt, ausgestattet mit einer relativ zu den übrigen Baugruppen des Beobachtungsgerätes räumlich trennbaren Bedienungseinheit.

Beobachtungsgeräte, darunter Mikroskope, verfügen je nach Einsatz und Anwendungsfall über eine Vielzahl von Parametern, die im Rahmen der Bedienung und Steuerung geändert, angepaßt und kontrolliert werden müssen. So gehören beispielsweise bei einem konventionellen Licht- oder Stereomikroskop die Einstellung der Fokussierung, die Veränderung des Abbildungsmaßstabes, die Veränderung und Auswahl von Kontrast- und Beleuchtungsverfahren, die Lichtregelung, die Verschiebung des Objektes und die Versorgung mit Betriebsspannung zu den Möglichkeiten, die Beobachtung zu optimieren. Diese Aufzählung ist nicht vollständig.

Im Falle von Mikroskopen ist nach Stand der Technik die Bedienung und Steuerung über manuell zu betätigende Drehknöpfen, Schalter, Schieber usw. üblich, die an unterschiedlichen Stellen am Mikroskop angeordnet sein können. Für den Benutzer ist diese Anordnung häufig unbequem, da die Bedienungs- und Steuerungselemente häufig an ergonomisch ungünstigen Positionen angebracht sind. Soll viele Stunden lang ununterbrochen mikroskopiert werden, macht sich dies ermüdend und daher nachteilig bemerkbar.

Zwar sind auch Anordnungen bekannt, mit denen es möglich ist, ein Lichtmikroskop über PC oder Laptop zu bedienen und zu steuern, jedoch ist eine solche Lösung verhältnismäßig material- und zeitaufwendig und kommt daher insbesondere für Ausbildungs- und Routineeinsätze nicht in Betracht. Außerdem beansprucht eine solche Kombination aus Mikroskop und Steuerrechner, verglichen mit dem Mikroskop an sich, unverhältnismäßig viel Aufstellfläche. DE 200 13 359 U1 offenbart ein Beobachtungsgerät mit einer Bedienungseinheit nach dem Stand der Technik.

Der Erfindung liegt daher die Aufgabe zugrunde, ein Beobachtungsgerät der eingangs beschriebenen Art derart weiterzuentwickeln, daß dem Benutzer eine vereinfachte und ergonomisch günstige Bedienung möglich ist.

Erfindungsgemäß sind an der Bedienungseinheit Mittel zur Anzeige und Vorgabe von auf die Geräteparameter bezogenen Einstellwerten und/oder Mittel zur Darstellung von Bildern des zu beobachtenden Objekts oder des Verfahrensablaufs vorgesehen.

Diese Mittel zur Anzeige können bevorzugt als Bildschirm, insbesondere als Grafik-Display ausgebildet sein. In weiterer Ausgestaltung kann ein Touch-Screen vorgesehen sein, der die Eingabe von Bedienungs- und Steuerbefehlen durch Berührung der Anzeigefläche ermöglicht.

Alternativ dazu oder auch zusätzlich ist die Bedienungseinheit mit programmierbaren Tasten ausgestattet, die je nach Festlegung der Funktion der Befehlseingabe für unterschiedliche Geräteparameter dienen. Weiterhin kann der Bedienungseinheit ein programmierbarer Joystick zugeordnet sein, der ebenfalls zur Befehlseingabe ausgebildet ist.

Zur Übertragung der Bedienungs- und Steuerbefehle von der Bedienungseinheit zu den übrigen Gerätekomponenten kommt eine drahtlose oder auch drahtgebundene Verbindung in Betracht.

Im letzteren Falle ist diese Verbindung vorteilhaft als CAN-Bus-Verbindung ausgebildet. Als mechanisches Hilfsmittel kann eine Vorrichtung zum automatischen Auf- und Abrollen der Signalleitung zwischen der Bedienungseinheit und den übrigen Geräteeinheiten vorgesehen sein, die sich insbesondere bei häufiger Ortsveränderung der Bedienungseinheit als nützlich erweist.

Bevorzugt sind an der Bedienungseinheit und am Grundaufbau des Beobachtungsgerätes Befestigungselemente vorhanden, die im Sinne einer Kupplungseinrichtung miteinander kooperieren und die bei Bedarf der mechanischen Ankopplung der Bedienungseinheit beispielsweise an das Gerätegestell des Beobachtungsgerätes dienen.

Handelt es sich bei dem Beobachtungsgerät beispielsweise um ein Mikroskop, so ist mit Hilfe der Kupplungseinrichtung die Bedienungseinheit mit dem Mikroskopaufbau verbunden oder vom Mikroskopaufbau lösbar. So kann sich die Bedienungseinheit bei Ruhestellung am Mikroskopaufbau befinden.

Die Kupplungseinrichtung weist dabei vorteilhaft Halteelemente zur formschlüssigen Verbindung der Bedienungseinheit mit dem Mikroskopaufbau auf. Diese können beispielsweise durch eine Schwalbenschwanzführung realisiert werden, die zweckmäßig mit Anschlägen zur Begrenzung der Beweglichkeit in Führungsrichtung versehen sind. So wird beispielsweise verhindert, daß die Bedienungseinheit beim Anheben oder Umsetzen des Beobachtungsgerätes bzw. Mikroskops ungewollt abgetrennt wird. Außer einer solchen Schwalbenschwanzführung sind selbstverständlich auch alle anderen Arten von formschlüssigen Verbindungen mit ineinandergreifenden mechanischen Elementen denkbar.

Alternativ kann die Kupplungseinrichtung mit Halteelementen zur kraftschlüssigen Verbindung der Bedienungseinheit am Geräteaufbau ausgestattet sein, wobei beispielsweise eine Fläche am Gerätegestell magnetisierbar ist und auf einer korrespondierenden Fläche der Bedienungseinheit Permanentmagnete vorgesehen sind. Um einen paßgenauen Sitz zu erzielen, können zusätzlich Führungsstifte vorgesehen sein, die in entsprechende Aussparungen am Gerätegestell des Mikroskops eingreifen. Auch die Permanentmagnete können als Stifte ausgestaltet sein.

Zur Umsetzung in eine Arbeitsstellung wird die Bedienungseinheit durch lösen der Kupplungseinrichtung vom Geräteaufbau und in eine für den Benutzer ergonomisch günstige Position gebracht. Das Lösen der Bedienungseinheit vom Geräteaufbau kann dabei bevorzugt ohne technische Hilfsmittel bzw. Werkzeuge erfolgen.

Beim Betätigen von Bedienungselementen, die an der Bedienungseinheit angebracht sind, werden die Steuersignale von der Bedienungseinheit an die übrigen Gerätebaugruppen übermittel, was wie bereits dargelegt drahtlos über Funk oder eine Infrarot-Schnittstelle oder drahtgebunden erfolgen kann.

Die drahtlose Übertragung ist bevorzugt der Weitergabe von Signalen zur Lichtregelung, Probenverstellung, Fokussierung, Wechsel zwischen Betriebs- und Stand-By-Modus vorbehalten. Bei anderen Signalen, wie etwa zum Ein- und Ausschalten des Gerätes, ist eine drahtgebundene Verbindung über Kabel unerläßlich.

Insbesondere zwecks Zuführung von Hilfsenergie zu der Bedienungseinheit kann vorteilhaft eine Steckverbindung mit elektrischen Kontakten vorgesehen sein, die gegebenenfalls auch einen Datenbus einschließt und so den Datentransfer zwischen den Gerätekomponenten und der Bedienungseinheit ermöglicht. Besonders bevorzugt ist die Steckverbindung als CAN-Bus-Verbindung ausgestaltet.

Gegenüber der Ankopplung eines herkömmlichen PC an einen Mikroskopaufbau hat die erfindungsgemäße Lösung den wesentlichen Vorteil, daß das Mikroskop ergonomisch günstiger bedient werden kann. Außerdem besteht der Vorteil der Kompaktheit aufgrund der Möglichkeit, die Bedienungseinheit zumindest zeitweise am Mikroskopaufbau anbringen zu können.

Ist die Bedienungseinheit mit programmierbaren Tasten ausgestattet, die dem Abruf von eingestellten Geräteparametern dienen, kann der Benutzer sofort an der ebenfalls der Bedienungseinheit zugeordneten Anzeigeeinrichtung diese Parameter ablesen, aus den abgelesenen Geräteparametern Schlußfolgerungen auf zu verändernde Geräteparameter ziehen und diese zwecks Einstellung am Mikroskop über die Befehlstasten an der Bedienungseinheit vorgeben.

Die Eingabeelemente an der Bedienungseinheit können selbstverständlich nicht nur als Tasten, sondern auch in jeder anderen, zur Befehlseingabe geeigneten Form ausgebildet sein. So kann beispielsweise ein Scroll-Rad zum Wechseln der Anzeige an der Bedienungseinheit zwischen unterschiedlichen Geräteparametern vorhanden sein.

In besonderer Ausgestaltung kann an der Bedienungseinheit eine Einrichtung zur Ausgabe akustischer, in Lautstärke oder Frequenz von eingestellten oder vorzugebenden Geräteparametern abhängiger Signale ausgestattet sein.

Die Erfindung soll nachfolgend anhand von Ausführungsbeispielen näher erläutert werden. In den zugehörigen Zeichnungen zeigen:
- Fig.1: einen Mikroskopaufbau und eine Bedienungseinheit, die über eine Kupplungseinrichtung miteinander verbunden sind,
- Fig.2: die Bedienungseinheit in vergrößerter Darstellung,
- Fig.3, 4: weitere mögliche Ausgestaltungen von Bedienungseinheiten.

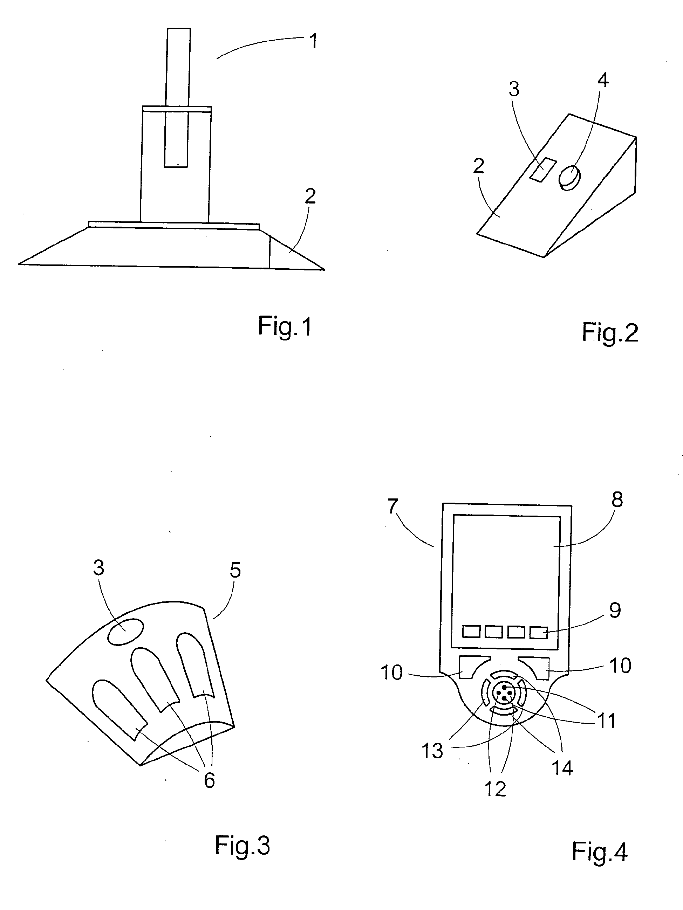

Fig.1 zeigt einen Mikroskopaufbau 1 mit einer Bedienungseinheit 2, welche über eine (zeichnerisch nicht dargestellte) Kupplungsvorrichtung mit dem Mikroskopaufbau 1 verbunden ist.

Die Bedienungseinheit 2 ist in Fig.2 vereinzelt und vergrößert dargestellt. Die Übermittlung von Signalen vor der Bedienungseinheit 2 an den übrigen Teil des Mikroskopaufbaus 1 erfolgt hier beispielsweise drahtlos.

An der Bedienungseinheit 2 sind zwei Bedienungselemente zu erkennen, nämlich ein Netzschalter 3, mit dem das Umschalten zwischen einem Stand-By-Modus und dem Betriebsmodus veranlaßt werden kann, sowie ein Drehknopf 4 zur Lichtregelung, mit dem sich die Helligkeit des Beleuchtungslichts insbesondere bei Durchlichtbeobachtung beeinflussen läßt.

Fig.3 zeigt eine erste alternativ zu Fig.2 ausgeführte Bedienungseinheit 5. Auch hier findet sich ein Netzschalter 3 zum Wechseln zwischen Betriebs- und Stand-By-Modus. Für weitere Bedienungsfunktionen sind die Tasten 6 vorgesehen.

In Fig.4 schließlich ist eine zweite alternativ ausgeführte Bedienungseinheit 7 dargestellt. Diese verfügt über einen Touch-Screen 8 mit Touch-Screen-Tasten 9. Auf dem Touch-Screen 8 können einerseits Bedienungsfunktionen angezeigt werden, andererseits kann aber auch das beobachtete Bild dargestellt werden, sofern der Mikroskopaufbau 1 über entsprechende Komponenten zur Bildaufnahme verfügt.

Die Beobachtung eines Objekts bzw. einer Probe kann in diesem Falle an der Bedienungseinheit 7 bzw. am Touch-Screen 8 und muß nicht über die Okulare des Mikroskopaufbaus 1 erfolgen. Die Bedienungseinheit 7 verfügt außerdem auch noch über speziell angepaßte Bedienungselemente für die direkte Vorgabe oder Beeinflussung von Gerätefunktionen. Neben Eingabetasten 10 sind dies Fokussierungstasten 11, Zoomtasten 12, Durchlichtregelungstasten 13 und Auflichtregelungstasten 14.

Alle Tasten sind hier paarweise vorhanden, da es zwei Richtungen gibt, in welche die Einstellungen verändert werden können. Die Durchlichtregelungstasten 13 und Auflichtreglungstasten 14 können wahlweise bei entsprechender Programmierung auch zur Navigation verwendet werden. So kann beispielsweise der Probenträger mittels dieser Tasten relativ zum Mikroskopobjektiv bewegt und damit ein anderer Ausschnitt der Probe zur Beobachtung auf dem Touch-Screen 8 eingestellt werden.

### Bezugszeichenliste

- 1: Mikroskopaufbau
- 2: Bedienungseinheit
- 3: Netzschalter
- 4: Drehknopf
- 5: erste alternative Bedienungseinheit
- 6: Tasten
- 7: zweite alternative Bedienungseinheit
- 8: Touch-Screen
- 9: Touch-Screen-Tasten
- 10: Eingabetasten
- 11: Fokussierungstasten
- 12: Zoomtasten
- 13: Durchlichtregelungstasten
- 14: Auflichtregelungstasten

## Patentansprüche

1. Beobachtungsgerät, mit dem ein Benutzer Objekte oder Verfahrensabläufe beobachtet und die Darstellung eines Objekts oder eines Verfahrensablaufs durch die Eingabe von Bedienungs- und Steuerbefehlen zur Änderung von Geräteparametern beeinflußt, ausgestattet mit einer relativ zu den übrigen Baugruppen des Beobachtungsgerätes räumlich trennbaren Bedienungseinheit (7), **dadurch gekennzeichnet, daß** an der Bedienungseinheit (7)
- Mittel zur Anzeige und Vorgabe von auf die Geräteparameter bezogenen Einstellwerten und/oder
- Mittel zur Darstellung von Bildern des zu beobachtenden Objekts oder Verfahrensablaufs vorgesehen sind.
- eine Kupplungseinrichtung zur formschlüssigen oder kraftschlüssigen Befestigung der Bedienungseinheit an dem übrigen Aufbau des Beobachtungsgeräts vorgesehen ist.

## Claims

1. Monitoring device with which a user monitors objects or method sequences and influences the display of an object or of a method sequence by inputting operating and control commands to change device parameters, and which is equipped with an operating unit (7) which can be spatially separated from the remaining modules of the monitoring device, **characterized in that**, provided on the operating unit (7) are
- means for displaying and stipulating setting values related to the device parameters, and/or
- means for displaying images of the object or method sequence to be monitored, and
- a coupling device for the positive or non-positive fixing of the operating unit on the remaining structure of the monitoring device.

## Revendications

1. Dispositif d'observation avec lequel un utilisateur observe des objets ou des déroulements de procédé et influence la représentation d'un objet ou d'un déroulement de procédé par l'entrée d'ordres de commande et de contrôle pour faire varier des paramètres du dispositif, muni d'une unité de commande (7) séparable spatialement par rapport aux autres modules du dispositif d'observation, **caractérisé en ce qu'**il est prévu au niveau de l'unité de commande (7) :
- des moyens d'affichage et de prédéfinition de valeurs d'ajustement rapportées aux paramètres du dispositif et/ou
- des moyens pour représenter des images de l'objet ou du déroulement de procédé à observer
- un dispositif d'accouplement pour la fixation par engagement positif ou par force de l'unité de commande au reste de la structure du dispositif d'observation.
